# EUROPÄISCHE PATENTSCHRIFT

(11) **EP 3 328 715 B1**
(45) Veröffentlichungstag und Bekanntmachung des Hinweises auf die Patenterteilung: **07.08.2019**
(21) Anmeldenummer: 16751494.2
(22) Anmeldetag: 19.07.2016
(51) Int. Cl.: B62D 15/02

(54) **VERFAHREN ZUM ZUMINDEST SEMI-AUTONOMEN MANÖVRIEREN EINES KRAFTFAHRZEUGS MIT LAGEKORREKTUR, FAHRERASSISTENZSYSTEM SOWIE KRAFTFAHRZEUG**
METHOD FOR AT LEAST SEMI-AUTONOMOUS MANOEUVRING OF A MOTOR VEHICLE WITH POSITIONAL CORRECTION, DRIVER ASSISTANCE SYSTEM AND MOTOR VEHICLE
PROCÉDÉ PERMETTANT DE MANOEUVRER UN VÉHICULE AUTOMOBILE DE MANIÈRE AU MOINS SEMI-AUTOMATIQUE PAR UNE CORRECTION DE POSITION, SYSTÈME D'AIDE À LA CONDUITE ET VÉHICULE AUTOMOBILE

(30) Priorität: 28.07.2015 DE 102015112313
(43) Veröffentlichungstag der Anmeldung: 06.06.2018
(73) Patentinhaber: Valeo Schalter und Sensoren GmbH, 74321 Bietigheim-Bissingen (DE)
(72) Erfinder: AYYAPPAN, Thirumalai Kumarasamy, 74321 Bietigheim-Bissingen (DE)
(74) Vertreter: Pothmann, Karsten
(86) Internationale Anmeldenummer: PCT/EP2016/067190
(87) Internationale Veröffentlichungsnummer: WO 2017/016935

(56) Entgegenhaltungen:
- EP-A2- 2 689 990
- JP-A- 2014 101 101

## Beschreibung

Die vorliegende Erfindung betrifft ein Verfahren zum zumindest semi-autonomen Manövrieren eines Kraftfahrzeugs, bei welchem mittels eines Sensors ein Lagewert bestimmt wird, welcher eine aktuelle relative Lage zwischen einem Objekt in einem Umgebungsbereich des Kraftfahrzeugs und dem Kraftfahrzeug beschreibt, eine Fahrtrajektorie bestimmt wird, das Kraftfahrzeug entlang der bestimmten Fahrtrajektorie manövriert wird, während des Manövrieren des Kraftfahrzeugs auf Grundlage von Odometrie der Lagewert fortlaufend aktualisiert wird und ein Kontakt zumindest eines Rades des Kraftfahrzeugs mit dem Objekt erkannt wird. Zudem betrifft die vorliegende Erfindung ein Fahrerassistenzsystem für ein Kraftfahrzeug. Schließlich betrifft die vorliegende Erfindung ein Kraftfahrzeug mit einem derartigen Fahrerassistenzsystem.

Das Interesse richtet sich vorliegend insbesondere auf Fahrerassistenzsysteme, welche den Fahrer beim Manövrieren des Kraftfahrzeugs und insbesondere beim Einparken des Kraftfahrzeugs in eine Parklücke unterstützen. Aus dem Stand der Technik sind bereits Fahrerassistenzsysteme bekannt, welche mit Hilfe von entsprechenden Sensoren Parklücken beziehungsweise freie Stellplätze erkennen können und den Fahrer beim Einparkvorgang unterstützen. Hierbei kann der Fahrer sowohl beim Längsparken als auch beim Querparken unterstützt werden. Darüber hinaus sind Fahrerassistenzsysteme bekannt, die das Kraftfahrzeug bei einem Einparkvorgang semi-autonom manövrieren. Hierbei übernimmt das Fahrerassistenzsystem die Lenkung des Kraftfahrzeugs und der Fahrer betätigt das Gaspedal und die Bremse. Ferner sind bereits Fahrerassistenzsysteme bekannt, die ein autonomes beziehungsweise vollautonomes Manövrieren des Kraftfahrzeugs ermöglichen.

Des Weiteren sind aus dem Stand der Technik Fahrerassistenzsysteme bekannt, die den Fahrer bei Einparkmanövern unterstützen, bei denen ein Bordstein überfahren wird. Dies ist beispielsweise gegeben, wenn das Kraftfahrzeug beim Einparken derart bewegt wird, dass das zumindest eine Rad des Kraftfahrzeugs über einen Bordstein bewegt wird. Hierbei ist es zudem von Interesse, einen Kontakt des zumindest einen Rades mit dem Bordstein zu erkennen. Zu diesem Zweck kann beispielsweise das mit einem Antriebsmotor bereitgestellte Drehmoment erfasst werden. Anhand einer Veränderung des Drehmoments kann der Kontakt des zumindest einen Rades mit dem Bordstein erkannt werden.

Darüber hinaus beschreibt die DE 10 2012 014 809 A1 ein Verfahren zum Erkennen einer Bordsteinüberfahrt eines Kraftfahrzeugs bei einem Rangiermanöver mit einer Geschwindigkeit kleiner oder gleich 10 km/h. Hierbei werden mit Radsensoren der Räder des Kraftfahrzeugs jeweils eine Radgeschwindigkeit und eine Fahrtrichtung ermittelt. Die Bordsteinfahrt wird identifiziert, wenn ein Rad eine positive Beschleunigung für ein vorgegebenes Zeitintervall und mindestens eines der anderen Räder eine negative Beschleunigung für dieselbe Zeitdauer aufweist. Ferner wird die Erkennung der Bordsteinüberfahrt zur Korrektur einer odometrischen Positionsbestimmung und zur Berechnung von Trajektorien eines Parkassistenten eingesetzt.

JP 2014 101101 A ist als nächstliegender Stand der Technik nach dem Oberbegriff des Anspruchs 1 zu sehen und offenbart ein Verfahren für eine Einparkhilfe. Dabei wird ein Hindernis auf der Fahrbahnoberfläche durch einen ersten Sensor erfasst, Das Hindernis kann eine Höhe aufweisen, die das Fahrzeug überwinden kann. Ein zweiter Sensor ist so eingestellt, dass das Hindernis, beispielsweise ein Bordstein, in den Erfassungsbereich aufgenommen wird. Dann wird die Position eines Parkplatzes anhand des Detektionsergebnisses des ersten Sensors geschätzt und das Vorhandensein oder Fehlen eines niedrigen Hindernisses anhand des Detektionsergebnisses des ersten Sensors und des Detektionsergebnisses des zweiten Sensors bestimmt.

EP 2 689 990 A2 offenbart ein Verfahren zum Bestimmen der Radgeschwindigkeit und der Fahrtrichtung durch Radsensoren der Räder des Kraftfahrzeugs. Die Geschwindigkeit jedes Rades wird kontinuierlich ausgewertet. Der Bordsteinübergang wird identifiziert, wenn ein Rad eine positive Beschleunigung für ein vorbestimmtes Zeitintervall hat und das andere Rad eine negative Beschleunigung für das gleiche Zeitintervall hat. Der Bordsteinübergang wird erkannt, wenn die Geschwindigkeitsdifferenz zwischen einer maximalen Geschwindigkeit und einer anfänglichen Geschwindigkeit er ansteigenden Flanke des Beschleunigungssignals des Rades über einem vorbestimmten Schwellenwert liegt.

Es ist Aufgabe der vorliegenden Erfindung, eine Lösung aufzuzeigen, wie ein Kraftfahrzeug, insbesondere beim Einparken in eine Parklücke, zuverlässiger manövriert werden kann.

Diese Aufgabe wird erfindungsgemäß durch ein Verfahren, durch ein Fahrerassistenzsystem sowie ein Kraftfahrzeug mit den Merkmalen gemäß den jeweiligen unabhängigen Ansprüchen gelöst. Vorteilhafte Ausführungen der Erfindung sind Gegenstand der abhängigen Ansprüche, der Beschreibung und der Figuren.

Ein erfindungsgemäßes Verfahren dient zum zumindest semi-autonomen Manövrieren eines Kraftfahrzeugs. Hierbei wird mittels eines Sensors ein Lagewert bestimmt, welcher eine aktuelle relative Lage zwischen einem Objekt in einem Umgebungsbereich des Kraftfahrzeugs und dem Kraftfahrzeug beschreibt. Ferner wird eine Fahrtrajektorie bestimmt und das Kraftfahrzeug entlang der bestimmten Fahrtrajektorie manövriert. Darüber hinaus wird während des Manövrierens des Kraftfahrzeugs auf Grundlage von Odometrie der Lagewert fortlaufend aktualisiert und ein Kontakt zumindest eines Rades des Kraftfahrzeugs mit dem Objekt erkannt. Hierbei ist es zudem vorgesehen, dass der Lagewert korrigiert wird, falls der Kontakt des zumindest einen Rades mit dem Objekt erkannt wird und der Lagewert eine von dem Kontakt des zumindest einen Rades mit dem Objekt verschiedene relative Lage beschreibt, wobei eine digitale Umgebungskarte bereitgestellt wird, welche den Umgebungsbereich beschreibt, und eine Position des Kraftfahrzeugs und/oder des Objekts in der Umgebungskarte anhand des korrigierten Lagewerts angepasst wird.

Mit Hilfe des Verfahrens soll das Kraftfahrzeug zumindest semi-autonom manövriert werden. Insbesondere dient das Verfahren dazu, den Fahrer beim Einparken des Kraftfahrzeugs in eine Parklücke zu unterstützen. Mittels eines Sensors des Kraftfahrzeugs wird das Objekt in der Umgebung des Kraftfahrzeugs erfasst. Dabei kann es auch vorgesehen sein, dass mehrere Sensoren des Kraftfahrzeugs dazu verwendet werden, um das Objekt in dem Umgebungsbereich zu erfassen. Der zumindest eine Sensor kann beispielsweise ein Ultraschallsensor sein. Anhand der Sensordaten, die von dem Sensor bereitgestellt werden, kann eine relative Lage zwischen dem Objekt und dem Kraftfahrzeug bestimmt werden. Zum Bestimmen der relativen Lage kann beispielsweise eine Steuereinrichtung, insbesondere ein elektronisches Steuergerät, des Kraftfahrzeugs verwendet werden. Hierzu können die Daten von unterschiedlichen Sensoren herangezogen werden. Es kann auch vorgesehen sein, dass das Kraftfahrzeug relativ zu dem Objekt bewegt wird und der Abstand zwischen dem Kraftfahrzeug und dem Objekt zu unterschiedlichen Zeitpunkten ermittelt wird. Hieraus kann dann ein Lagewert bestimmt werden, welcher die aktuelle relative Lage zwischen dem Kraftfahrzeug und dem Objekt des Kraftfahrzeugs beschreibt.

Darüber hinaus kann mittels der Steuereinrichtung die Fahrtrajektorie bestimmt werden, entlang der das Kraftfahrzeug bewegt wird. Dabei kann die Fahrtrajektorie derart bestimmt werden, dass diese zu dem Objekt beziehungsweise in Richtung des Objekts führt. Während der Fahrt des Kraftfahrzeugs entlang der Fahrtrajektorie wird der Lagewert auf Grundlage von Odometrie fortlaufend aktualisiert. Mittels der Odometrie kann die aktuelle Fahrzeugposition bestimmt werden. Zu diesem Zweck kann beispielsweise ausgehend von einem Startpunkt der Fahrtrajektorie, an dem der Lagewert zunächst bestimmt wird, eine Anzahl der Radumdrehungen, die mit dem zumindest einen Rad durchgeführt wurden, bestimmt werden. Anhand der bekannten Abmessungen des Rades kann dann der von dem Kraftfahrzeug zurückgelegte Weg bestimmt werden. Weiter können die Daten eines Lenkwinkelsensors und/oder eines Gierratensensors des Kraftfahrzeugs herangezogen werden, um die Fahrtrichtung beziehungsweise Orientierung des Kraftfahrzeugs während des Manövrierens zu bestimmen. Somit kann während der Fahrt des Kraftfahrzeugs entlang der Fahrtrajektorie fortlaufend die Fahrzeugposition und somit auch die relative Lage beziehungsweise der Lagewert kontinuierlich aktualisiert werden.

Erfindungsgemäß ist es nun vorgesehen, dass überprüft wird, ob ein Kontakt des zumindest einen Rades mit dem Objekt vorliegt. Wenn der Kontakt erkannt wurde, wird der Lagewert korrigiert. Insbesondere wird der Lagewert korrigiert, falls der Kontakt zwischen dem Rad und dem Objekt erkannt wird und der Lagewert angibt, dass das Kraftfahrzeug zu dem Objekt einen vorbestimmten Abstand aufweist. Der Lagewert kann insbesondere den Abstand zwischen dem Kraftfahrzeug und dem Objekt bezüglich zweier zueinander senkrecht der Raumrichtungen beschreiben. Falls der Lagewert angibt, dass zumindest einer dieser Abstände größer als null ist, kann davon ausgegangen werden, dass der Lagewert fehlerhaft bestimmt wurde. In diesem Fall wird der Lagewert korrigiert. Es kann auch der Fall sein, dass der Lagewert angibt, dass bereits ein Kontakt zwischen dem Rad und dem Objekt vorliegt, dieser aber in der Realität noch nicht vorliegt. In diesem Fall kann dann der Lagewert korrigiert werden, wenn das Objekt erreicht wird. Auf diese Weise kann insbesondere ein Fehler in der Odometrie erkannt werden, der bei dem Heranfahren des Kraftfahrzeugs entlang der Fahrtrajektorie an das Objekt entstanden ist. Durch die Korrektur des Lagewerts kann dieser Fehler behoben werden und somit das Kraftfahrzeug anschließend korrekt und zuverlässig manövriert werden.

Es wird eine digitale Umgebungskarte bereitgestellt, welche den Umgebungsbereich beschreibt, und eine Position des Kraftfahrzeugs und/oder des Objekts in der Umgebungskarte wird anhand des korrigierten Lagewerts angepasst. In der digitalen Karte kann die aktuelle Position des Kraftfahrzeugs und/oder des Objekts eingetragen sein. Zudem können die räumlichen Abmessungen des Kraftfahrzeugs und/oder des Objekts in der digitalen Karte hinterlegt sein. Diese Daten können anhand des korrigierten Lagewerts angepasst werden. Somit kann beispielsweise ein Fahrerassistenzsystem, das auf die digitale Umgebungskarte zurückgreift, zuverlässig betrieben werden.

Bevorzugt wird, falls der Kontakt zwischen dem zumindest einen Rad und dem Objekt erkannt, eine Abweichung zwischen einer realen relativen Lage zwischen dem Kraftfahrzeug und dem Objekt zu der durch den Lagewert beschriebenen relativen Lage bestimmt und der Lagewert wird anhand der bestimmten Abweichung korrigiert. Wenn der Kontakt zwischen dem zumindest einen Rad und dem Objekt vorliegt, kann davon ausgegangen werden, dass der Abstand zwischen diesem Rad und dem Objekt gleich null ist. Zudem kann der Lagewert untersucht werden, der insbesondere einen aktuellen Abstand zwischen dem Kraftfahrzeug und dem Objekt bezüglich zweier Raumrichtungen beschreibt. Der Lagewert kann beispielsweise beschreiben, dass der Abstand zwischen dem Objekt und dem zumindest einen Rad entlang der ersten Raumrichtung einen ersten Abstand aufweist und entlang der zweiten Raumrichtung einen zweiten Abstand aufweist. Der erste und der zweite Abstand können dann herangezogen werden, um den bestimmten Lagewert zu korrigieren. Mit anderen Worten wird also ein Korrekturwert beziehungsweise ein Korrekturfaktor für den Lagewert bestimmt. Somit kann der Lagewert zuverlässig korrigiert werden und damit Fehler der Odometrie ausgeglichen werden.

Weiterhin ist es vorteilhaft, wenn die Abweichung anhand von Abmessungen des zumindest einen Rades und/oder einer Lage des zumindest einen Rades relativ zu einem vorbestimmten Referenzpunkt des Kraftfahrzeugs bestimmt wird. Die Abmessungen des Kraftfahrzeugs können beispielsweise in einer Speichereinheit der Steuereinrichtung hinterlegt sein. Dort können insbesondere die Abmessungen der Räder des Kraftfahrzeugs hinterlegt sein. Zudem können die Abmessungen und/oder die Position der Räder bezüglich eines vorbestimmten Referenzpunktes des Kraftfahrzeugs, der beispielsweise auf dem Mittelpunkt der Hinterachse des Kraftfahrzeugs liegen kann, hinterlegt sein. Somit kann bei einer Berührung des zumindest einen Rades mit dem Objekt die relative Lage des Berührungspunktes, an dem das Rad das Objekt berührt, und des Referenzpunktes ermittelt werden. Hierbei kann es beispielsweise vorgesehen sein, dass ein Winkel einer Fahrzeuglängsachse und des Objekts bestimmt wird. Damit kann der Berührungspunkt genauer bestimmt werden. Falls das zumindest eine Rad ein lenkbares Rad des Kraftfahrzeugs ist, kann zudem ein aktueller Lenkwinkel bestimmt werden, um den Berührungspunkt genauer bestimmen zu können. Auf diese Weise kann der Lagewert präzise korrigiert werden.

In einer weiteren Ausführungsform wird mittels des Sensors zudem eine Parklücke in dem Umgebungsbereich erkannt, und die Fahrtrajektorie wird zum Einparken des Kraftfahrzeugs in die Parklücke bestimmt. Bei der Parklücke kann es sich grundsätzlich um eine Parklücke zum Längsparken, zum Querparken oder zum Schrägparken handeln. Die Steuereinrichtung kann beispielsweise die mit dem Sensor bereitgestellten Sensordaten entsprechend auswerten. Somit können beispielsweise Objekte erkannt werden, die die Parklücke begrenzen. Das Objekt kann sich dabei innerhalb der Parklücke befinden und/oder die Parklücke begrenzen. Somit kann der Fahrer des Kraftfahrzeugs zuverlässig beim Einparken in eine Parklücke unterstützt werden.

Bevorzugt wird als das Objekt ein Bordstein erkannt, welcher die Parklücke begrenzt oder innerhalb der Parklücke angeordnet ist. Vorliegend gilt das Interesse insbesondere Einparkvorgängen, bei denen zumindest ein Rad des Kraftfahrzeugs einen Bordstein berührt. Der Bordstein dient insbesondere zur Abgrenzung verschiedener Bereiche der Straße voneinander. Beispielsweise kann eine Fahrbahn von einem anderen Bereich der Straße durch den Bordstein abgegrenzt sein. Ein derartiger Einparkvorgang liegt beispielsweise vor, wenn die Parklücke durch einen Bordstein begrenzt ist. Diese Situation kann auch vorliegen, wenn zumindest ein Rad beim Einparken in die Parklücke über den Bordstein beziehungsweise auf den Bordstein hinauf bewegt wird. Dies ist insbesondere der Fall, wenn sich die Parklücke zumindest bereichsweise auf einem von einer Fahrbahn durch den Bordstein abgegrenzten Bereich befindet. Somit kann die relative Lage zwischen dem Kraftfahrzeug und dem Bordstein bestimmt werden. Während des Manövrieren des Kraftfahrzeugs kann Lagewert fortlaufend aktualisiert werden und bei dem Kontakt des zumindest einen Rades mit dem Bordstein kann der Lagewert korrigiert werden.

Bevorzugt wird eine Motordrehzahl eines Antriebsmotors des Kraftfahrzeugs erfasst und der Kontakt des zumindest einen Rades mit dem Objekt anhand eines Anstiegs der Motordrehzahl erkannt. Um die Berührung des zumindest eines Rades mit dem Objekt beziehungsweise dem Bordstein zu erkennen, kann eine Motordrehzahl eines Antriebsmotors des Kraftfahrzeugs fortlaufend erfasst werden. Der Antriebsmotor kann beispielsweise ein Verbrennungsmotor oder ein Elektromotor sein. Der Antriebsmotor dient dazu, das zumindest eine Rad des Kraftfahrzeugs anzutreiben. Wenn die Motordrehzahl eine Änderung aufweist, wird der Kontakt des zumindest einen Rades mit dem Objekt erkannt. Dem liegt die Erkenntnis zugrunde, dass das Objekt für das zumindest eine Rad des Kraftfahrzeugs ein Hindernis darstellt, welches beispielsweise zu überwinden ist. Wenn das zumindest eine Rad auf den Bordstein hinaufrollen soll, muss die Drehzahl des Antriebsmotors erhöht werden. Die Erfassung der Drehzahländerung, insbesondere eines Anstiegs der Drehzahl, zum Erkennen der Berührung des Objekts weist den Vorteil auf, dass die Motordrehzahl des Antriebsmotors einfach und zuverlässig erfasst werden kann. Die aktuelle Motordrehzahl wird bei Kraftfahrzeugen üblicherweise fortlaufend gemessen, sodass beispielsweise keine Umrechnungen durchgeführt werden müssen, um die Motordrehzahl zu bestimmen. Auf diese Weise kann der Kontakt des zumindest einen Rades mit dem Bordstein schnell und zuverlässig erkannt werden.

Gemäß einer weiteren Ausführungsform wird eine Drehrichtung des zumindest einen Rades erfasst und der Kontakt des zumindest einen Rades mit dem Objekt anhand der erfassten Drehrichtung erkannt. Hierbei kann insbesondere überprüft werden, ob das zumindest eine Rad seine Drehrichtung ändert. Dies ist beispielsweise der Fall, wenn das Rad in Richtung des Objekts bewegt wird und dann auf das Objekt trifft. Anhand der negativen Radumdrehungen kann dann der Kontakt zwischen dem zumindest einen Rad und dem Objekt beziehungsweise dem Bordstein zuverlässig erkannt werden.

Bevorzugt wird eine aktuelle Geschwindigkeit des Kraftfahrzeugs erfasst und der Kontakt des zumindest einen Rades mit dem Objekt zusätzlich anhand einer Veränderung der erfassten Geschwindigkeit erkannt. Weiterhin ist es vorteilhaft, wenn eine Geschwindigkeit, mit welcher das Kraftfahrzeug entlang der bestimmten Fahrtrajektorie bewegt wird, geregelt wird. Mit anderen Worten kann entlang der Fahrtrajektorie eine Soll-Geschwindigkeit vorgegeben werden, auf die die Geschwindigkeit des Kraftfahrzeugs geregelt wird. Hierbei kann das Kraftfahrzeug beispielsweise mit der Soll-Geschwindigkeit in Richtung des Bordsteins bewegt werden. Hierbei kann beispielsweise überprüft werden, ob sich die Geschwindigkeit des Kraftfahrzeugs abrupt verringert. Dies ist insbesondere der Fall, wenn das Rad den Bordstein berührt und das Kraftfahrzeug dadurch abgebremst wird. Zudem kann es auch vorgesehen sein, dass eine Regelabweichung einer Geschwindigkeitsregelanlage des Kraftfahrzeugs überwacht wird. Anhand dieser Regelabweichung kann dann auf die Berührung des Bordsteins rückgeschlossen werden.

Weiterhin ist es vorteilhaft, wenn ein mit dem Antriebsmotor bereitgestelltes Drehmoment erfasst wird und der Kontakt des zumindest einen Rades mit dem Objekt zusätzlich anhand einer Veränderung des erfassten Drehmoments erkannt wird. Das mit dem Antriebsmotor aktuell bereitgestellte Drehmoment kann beispielsweise anhand der Daten eines Motorsteuergeräts abgeleitet werden. Somit kann beispielsweise erkannt werden, dass das Drehmoment einen Anstieg aufweist. Liegt ein solcher Anstieg des Drehmoments vor, kann hieraus die Berührung des Bordsteins mit dem zumindest einen Rad erkannt werden. Dies ermöglicht eine sichere Erkennung des Kontakts des Rades mit dem Bordstein.

Weiterhin ist es vorteilhaft, wenn beim Erkennen des Kontakts des zumindest einen Rades mit dem Objekt ein mit dem Antriebsmotor zum Antreiben des zumindest einen Rades bereitgestelltes Drehmoment erhöht wird. Dabei kann mit dem Antriebsmotor das zumindest eine Rad selbst oder eine Achse, die mit dem zumindest einen Rad drehfest verbunden ist, angetrieben werden. Ab einem Zeitpunkt, ab dem der Kontakt erkannt wird, kann mit dem Antriebsmotor ein zusätzliches Drehmoment bereitgestellt werden. Damit kann bei einem Bordstein sichergestellt werden, dass das zumindest eine Rad über den Bordstein beziehungsweise die Bordsteinkante hinweg bewegt werden kann.

Gemäß einer weiteren Ausführungsform wird das Drehmoment erhöht, solange die Veränderung der Motordrehzahl erfasst wird. Hierbei kann beispielsweise überprüft werden, ob die Motordrehzahl einen vorbestimmten Schwellenwert überschreitet. Ferner kann überprüft werden, ob die Motordrehzahl einen Anstieg aufweist. Die Motordrehzahl kann beispielsweise nur so lange erhöht werden, solange die Motordrehzahl einen Anstieg aufweist. Wenn die Motordrehzahl beispielsweise wieder einen Abfall aufweist beziehungsweise sich verringert, kann davon ausgegangen werden, dass das zumindest eine Rad bereits über die Bordsteinkante hinweg gerollt ist. Wenn das erhöhte Drehmoment nur so lange bereitgestellt wird, solange die Motordrehzahl ansteigt, kann garantiert werden, dass das Kraftfahrzeug nach dem Überfahren des Bordsteins nicht beschleunigt wird.

Ein erfindungsgemäßes Fahrerassistenzsystem für ein Kraftfahrzeug ist zum Durchführen eines erfindungsgemäßen Verfahrens ausgelegt. Bevorzugt umfasst das Fahrerassistenzsystem einen Sensor, insbesondere einen Ultraschallsensor, mit dem Objekte in dem Umgebungsbereich des Kraftfahrzeugs erfasst werden können. Der zumindest eine Sensor kann auch als Kamera, Radarsensor, Lidar-Sensor oder dergleichen ausgebildet sein. Zudem kann das Fahrerassistenzsystem eine entsprechende Steuereinrichtung, beispielsweise ein elektronisches Steuergerät des Kraftfahrzeugs, umfassen. Mit der Steuereinrichtung kann anhand der Sensordaten, die von dem Sensor bereitgestellt werden, die Parklücke erkannt werden. Zudem kann mittels der Steuereinrichtung die Fahrtrajektorie bestimmt werden.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: das Kraftfahrzeug gemäß Fig. 1, welches in eine Parklücke eingeparkt wird;
- Fig. 3: ein schematisches Ablaufdiagramm eines Verfahrens zum zumindest semiautonomen Manövrieren des Kraftfahrzeugs; und
- Fig. 4: ein schematisches Ablaufdiagramm eines Verfahrens zum zumindest semiautonomen Manövrieren des Kraftfahrzeugs in einer weiteren Ausführungsform.

In den Figuren werden gleiche und funktionsgleiche Elemente mit den gleichen Bezugszeichen versehen.

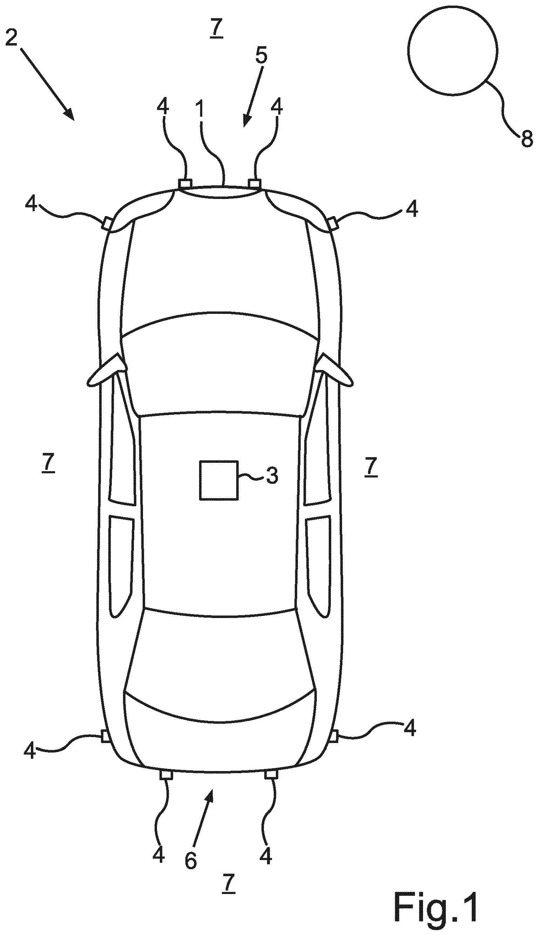

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Fahrerassistenzsystem 2. Das Fahrerassistenzsystem 2 umfasst wiederum eine Steuereinrichtung 3, welche beispielsweise durch ein elektronisches Steuergerät (ECU - Electronic Control Unit) des Kraftfahrzeugs 1 gebildet sein kann. Darüber hinaus umfasst das Fahrerassistenzsystem 2 zumindest einen Sensor 4.

Vorliegend umfasst das Fahrerassistenzsystem 2 acht Sensoren 4, die jeweils als Ultraschallsensoren ausgebildet sind. Dabei sind vier Sensoren 4 an einem Frontbereich 5 des Kraftfahrzeugs 1 und vier Sensoren 4 an einem Heckbereich 6 des Kraftfahrzeugs 1 angeordnet. Die Sensoren 4 sind dazu ausgebildet, zumindest ein Objekt 8 in einem Umgebungsbereich 7 des Kraftfahrzeugs 1 zu erfassen. Die Sensoren 4 dienen insbesondere dazu, eine relative Lage zwischen dem Objekt 8 und dem Kraftfahrzeug 1 zu bestimmen. Die Sensoren 4 können beispielsweise an entsprechenden Durchgangsöffnungen in den Stoßfängern des Kraftfahrzeugs 1 angeordnet sein. Es kann auch vorgesehen sein, dass die Sensoren 4 verdeckt hinter den Stoßfängern angeordnet sind.

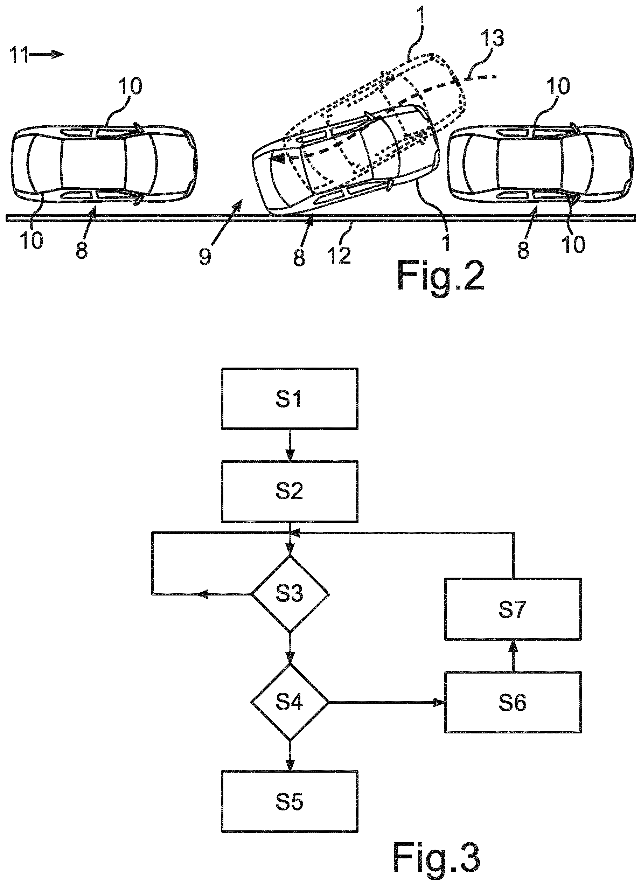

Fig. 2 zeigt das Kraftfahrzeug 1, welches in eine Parklücke 9 eingeparkt wird. Die Parklücke 9 ist vorliegend durch zwei weitere Fahrzeuge 10 begrenzt. Zum Erkennen der Parklücke 9 kann das Kraftfahrzeug 1 beispielsweise auf einer Fahrbahn 11 an den Fahrzeugen 10 vorbei bewegt werden. Während der Bewegung des Kraftfahrzeugs 1 kann mit den Sensoren 4 fortlaufend der Umgebungsbereich 7 des Kraftfahrzeugs 1 erfasst werden und hierbei als die Objekte 8 die weiteren Fahrzeuge 10 erkannt werden. Dabei kann der Freiraum zwischen den weiteren Fahrzeugen 10 vermessen werden und somit als Parklücke 9 erkannt werden. Ausgehend von einer aktuellen Position des Kraftfahrzeugs kann eine Fahrtrajektorie 13 bestimmt werden, entlang welcher das Kraftfahrzeug 1 in die Parklücke 9 bewegt wird.

Die Bewegung des Kraftfahrzeugs 1 entlang der Fahrtrajektorie 13 ist vorliegend schematisch dargestellt. Vorliegend wird das Kraftfahrzeug 1 rückwärts in die Parklücke 9 bewegt. Hierbei kann es vorgesehen sein, dass das Kraftfahrzeug 1 semi-autonom entlang der Fahrtrajektorie 13 manövriert wird. In diesem Fall übernimmt das Fahrerassistenzsystem 2 einen Eingriff in die Lenkung des Kraftfahrzeugs 1. Der Fahrer des Kraftfahrzeugs 1 betätigt weiterhin das Gaspedal und die Bremse. Es kann auch vorgesehen sein, dass das Kraftfahrzeug 1 vollautonom in die Parklücke 9 manövriert wird. Hierbei greift das Fahrerassistenzsystem 2 zusätzlich in einen Antriebsmotor und eine Bremse des Kraftfahrzeugs 1 ein.

Vorliegend ist die Parklücke 9 durch einen Bordstein 12 begrenzt. Dieser Bordstein 12 wird anhand der Sensordaten, die mit den Sensoren 4 bereitgestellt werden, erkannt. Hieraus kann mittels der Steuereinrichtung 3 eine relative Lage zwischen dem Kraftfahrzeug 1 und dem Objekt 8 beziehungsweise dem Bordstein 12 bestimmt werden. Insbesondere kann mittels der Steuereinrichtung 3 ein Lagewert bereitgestellt werden, der die relative Lage zwischen dem Kraftfahrzeug 1 und dem Bordstein 12 beschreibt. Während der Fahrt des Kraftfahrzeugs 1 entlang der Fahrtrajektorie 13 wird mittels Odometrie die Bewegung des Kraftfahrzeugs 1 bestimmt. Hierzu können die Umdrehungen zumindest eines Rades des Kraftfahrzeugs 1 ausgewertet werden, um die Bewegung des Kraftfahrzeugs 1 entlang der Fahrtrajektorie 13 zu bestimmen. Zudem kann der aktuelle Lenkwinkel erfasst werden, um eine Fahrtrichtung des Kraftfahrzeugs 1 zu bestimmen. Anhand der Odometriedaten kann der Lagewert während der Fahrt des Kraftfahrzeugs 1 entlang der Fahrtrajektorie 13 kontinuierlich aktualisiert beziehungsweise angepasst werden. Ferner kann es vorgesehen sein, dass mittels der Steuereinrichtung 3 eine digitale Umgebungskarte bereitgestellt wird, welche den Umgebungsbereich 7 des Kraftfahrzeugs 1 beschreibt. In diese Umgebungskarte können das Kraftfahrzeug 1, die weiteren Fahrzeuge 10 und der Bordstein 12 eingetragen sein.

Fig. 3 zeigt ein schematisches Ablaufdiagramm eines Verfahrens zum semi-autonomen Manövrieren des Kraftfahrzeugs 1. In einem Schritt S1 wird die Parklücke 9 erkannt. Zu diesem Zweck kann die Steuereinrichtung 3 die Sensordaten, die mit den Sensoren 4 bereitgestellt werden, entsprechend auswerten. Hierbei können die weiteren Fahrzeuge 10 und der Bordstein 12 anhand der Sensordaten erkannt werden. In einem weiteren Schritt S2 wird die Fahrtrajektorie 13 bestimmt und das Kraftfahrzeug 1 entlang der Fahrtrajektorie 13 in die Parklücke 9 bewegt. Während der Fahrt des Kraftfahrzeugs 1 entlang der Fahrtrajektorie 13 wird kontinuierlich der Lagewert aktualisiert. Somit kann auch der Abstand zwischen dem Kraftfahrzeug 1 beziehungsweise zumindest einem Rad des Kraftfahrzeugs 1 und dem Bordstein 12 bestimmt werden. In einem Schritt S3 wird überprüft, ob anhand der Informationen, die von dem Lagewert bereitgestellt werden, der Bordstein 12 erreicht ist. Ist dies nicht der Fall, wird der Schritt S3 nochmals durchgeführt. Wurde in dem Schritt S3 anhand des Lagewerts bestimmt, dass der Bordstein 12 bereits erreicht ist, wird das Verfahren in einem Schritt S4 weitergeführt.

In dem Schritt S4 wird überprüft, ob eine reale Berührung des zumindest einen Rades und des Bordsteins 12 vorliegt. Hierzu kann beispielsweise eine Motordrehzahl des Antriebsmotors des Kraftfahrzeugs 1 ausgewertet werden. Falls die Motordrehzahl einen Anstieg aufweist, kann davon ausgegangen werden, dass das zumindest eine Rad mit dem Bordstein 12 in Kontakt steht. Der Bordstein 12 stellt für das Rad ein Hindernis dar, das zu überwinden ist. Somit kann erkannt werden, dass ein realer Kontakt zwischen dem zumindest einen Rad und dem Bordstein 12 vorliegt. Wird dieser reale Kontakt erkannt, wird das Verfahren in einem Schritt S5 fortgeführt. In diesem Fall wird ein zusätzliches Drehmoment mit dem Antriebsmotor bereitgestellt, sodass das Kraftfahrzeug 1 auf den Bordstein 12 hinauffahren kann beziehungsweise so, dass das zumindest eine Rad auf den Bordstein 12 hinaufrollt.

Wird in dem Schritt S4 erkannt, dass kein Kontakt zwischen dem Rad und dem Bordstein 12 vorliegt, wird ein Schritt S6 durchgeführt. Hierbei wird überprüft, ob die digitale Umgebungskarte fehlerhaft ist. Ist dies der Fall, wird in einem Schritt S7 die Umgebungskarte korrigiert. Zum Korrigieren der Umgebungskarte kann der Lagewert korrigiert werden. In dem vorliegenden Fall ergibt sich aus der digitalen Umgebungskarte, die auf dem Lagewert basiert, dass bereits Kontakt zwischen dem Rad und dem Bordstein 12 vorliegen müsste. In Realität ist dies aber nicht der Fall.

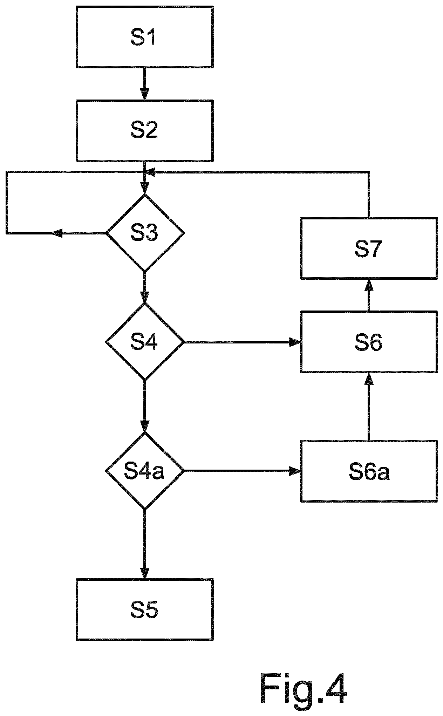

Fig. 4 zeigt ein schematisches Ablaufdiagramm eines Verfahrens zum zumindest semi-autonomen Manövrieren des Kraftfahrzeugs 1 in einer weiteren Ausführungsform. Hierbei wird in einem zusätzlichen Schritt S4a überprüft, ob die Raddrehzahl negativ ist. Somit kann zusätzlich zu dem Überprüfen der Motordrehzahl zuverlässig erkannt werden, ob das zumindest eine Rad in der Realität den Bordstein 12 berührt. Ferner wird in einem zusätzlichen Schritt S6a überprüft, ob die digitale Umgebungskarte fehlerhaft ist. Zum Bestimmen des Kontakts des zumindest einen Rades mit dem Bordstein 12 kann zusätzlich oder alternativ die Fahrzeuggeschwindigkeit ausgewertet werden. Falls sich diese abrupt reduziert, kann davon ausgegangen werden, dass das zumindest eine Rad auf den Bordstein 12 gerollt ist. Ferner kann das von dem Antriebsmotor bereitgestellte Drehmoment untersucht werden. Die einzelnen Verfahren zum Bestimmen des Kontakts zwischen dem Rad und dem Bordstein 12 können beliebig kombiniert und in einer beliebigen Reihenfolge durchgeführt werden. Auf diese Weise kann der Lagewert zuverlässig korrigiert werden.

## Patentansprüche

1. Verfahren zum zumindest semi-autonomen Manövrieren eines Kraftfahrzeugs (1), bei welchem mittels eines Sensors (4) ein Lagewert bestimmt wird, welcher eine aktuelle relative Lage zwischen einem Objekt (8) in einem Umgebungsbereich (7) des Kraftfahrzeugs (1) und dem Kraftfahrzeug (1) beschreibt, eine Fahrtrajektorie (13) bestimmt wird, das Kraftfahrzeug (1) entlang der bestimmten Fahrtrajektorie (13) manövriert wird, **dadurch gekennzeichnet, dass** während des Manövrierens des Kraftfahrzeugs (1) auf Grundlage von Odometrie der Lagewert fortlaufend aktualisiert wird und ein Kontakt zumindest eines Rades des Kraftfahrzeugs (1) mit dem Objekt (8) erkannt wird, wobei der Lagewert korrigiert wird, falls der Kontakt des zumindest einen Rades mit dem Objekt (8) erkannt wird und der Lagewert eine von dem Kontakt des zumindest einen Rades mit dem Objekt (8) verschiedene relative Lage beschreibt, wobei eine digitale Umgebungskarte bereitgestellt wird, welche den Umgebungsbereich beschreibt, und eine Position des Kraftfahrzeugs (1) und/oder des Objekts (8) in der Umgebungskarte anhand des korrigierten Lagewerts angepasst wird.

2. Verfahren nach Anspruch 1,
**dadurch gekennzeichnet, dass**
falls der Kontakt zwischen dem zumindest einen Rad und dem Objekt (8) erkannt wird, eine Abweichung zwischen einer realen relativen Lage zwischen dem Kraftfahrzeug (1) und dem Objekt (8) zu der durch den Lagewert beschriebenen relativen Lage bestimmt wird und der Lagewert anhand der bestimmten Abweichung korrigiert wird.

3. Verfahren nach Anspruch 2,
**dadurch gekennzeichnet, dass**
die Abweichung anhand von Abmessungen des zumindest einen Rades und/oder einer Lage des zumindest einen Rades relativ zu einem vorbestimmten Referenzpunkt des Kraftfahrzeugs (1) bestimmt wird.

4. Verfahren nach einem der vorhergehenden Ansprüche,
**dadurch gekennzeichnet, dass**
mittels des Sensors (8) zudem eine Parklücke (9) in dem Umgebungsbereich (7) erkannt wird und die Fahrtrajektorie (13) zum Einparken des Kraftfahrzeugs (1) in die Parklücke (9) bestimmt wird.

5. Verfahren nach Anspruch 4,
**dadurch gekennzeichnet, dass**
als das Objekt (8) ein Bordstein (12) erkannt wird, welcher die Parklücke (9) begrenzt oder innerhalb der Parklücke (9) angeordnet ist.

6. Verfahren nach einem der vorhergehenden Ansprüche,
**dadurch gekennzeichnet, dass**
eine Motordrehzahl eines Antriebsmotors des Kraftfahrzeugs (1) erfasst wird und der Kontakt des zumindest einen Rades mit dem Objekt (8) anhand eines Anstiegs der Motordrehzahl erkannt wird.

7. Verfahren nach einem der vorhergehenden Ansprüche,
**dadurch gekennzeichnet, dass**
eine Drehrichtung des zumindest einen Rades erfasst wird und der Kontakt des zumindest einen Rades mit dem Objekt (8) anhand der erfassten Drehrichtung erkannt wird.

8. Verfahren nach einem der vorhergehenden Ansprüche,
**dadurch gekennzeichnet, dass**
eine aktuelle Geschwindigkeit des Kraftfahrzeugs (1) erfasst wird und der Kontakt des zumindest einen Rades mit dem Objekt (8) zusätzlich anhand einer Veränderung der erfassten Geschwindigkeit erkannt wird.

9. Verfahren nach einem der vorhergehenden Ansprüche,
**dadurch gekennzeichnet, dass**
ein mit dem Antriebsmotor bereitgestellte Drehmoment erfasst wird und der Kontakt des zumindest einen Rades mit dem Objekt (8) zusätzlich anhand einer Veränderung des erfassten Drehmoments erkannt wird.

10. Verfahren nach einem der vorhergehenden Ansprüche,
**dadurch gekennzeichnet, dass**
bei dem Erkennen des Kontakts des zumindest einen Rades mit dem Objekt (8) ein mit dem Antriebsmotor zum Antreiben des zumindest einen Rades bereitgestelltes Drehmoment erhöht wird.

11. Fahrerassistenzsystem (2) für ein Kraftfahrzeug (1), welches zum Durchführen eines Verfahrens nach einem der vorhergehenden Ansprüche ausgelegt ist.

12. Kraftfahrzeug (1) mit einem Fahrerassistenzsystem (2) nach Anspruch 11.

## Claims

1. Method for at least semi-autonomously manoeuvring a motor vehicle (1), in which a sensor (4) is used to determine a position value describing a current relative position between an object (8) in an area (7) surrounding the motor vehicle (1) and the motor vehicle (1), a driving trajectory (13) **characterized in that** is determined, the motor vehicle (1) is manoeuvred along the determined driving trajectory (13), **characterized in that** the position value is continuously updated during manoeuvring of the motor vehicle (1) on the basis of odometry, and contact between at least one wheel of the motor vehicle (1) and the object (8) is detected,
wherein
the position value is corrected if the contact between the at least one wheel and the object (8) is detected and the position value describes a relative position which differs from the contact between the at least one wheel and the object (8),
wherein
a digital environmental map which describes the surrounding area is provided, and a position of the motor vehicle (1) and/or of the object (8) in the environmental map is adapted on the basis of the corrected position value.

2. Method according to Claim 1,
**characterized in that**
if the contact between the at least one wheel and the object (8) is detected, a difference between an actual relative position between the motor vehicle (1) and the object (8) and the relative position described by the position value is determined and the position value is corrected on the basis of the determined difference.

3. Method according to Claim 2,
**characterized in that**
the difference is determined on the basis of dimensions of the at least one wheel and/or a position of the at least one wheel relative to a predetermined reference point of the motor vehicle (1).

4. Method according to one of the preceding claims,
**characterized in that**
the sensor (8) is also used to detect a parking space (9) in the surrounding area (7), and the driving trajectory (13) for parking the motor vehicle (1) in the parking space (9) is determined.

5. Method according to Claim 4,
**characterized in that**
a kerb (12) which borders the parking space (9) or is arranged inside the parking space (9) is detected as the object (8).

6. Method according to one of the preceding claims,
**characterized in that**
a motor speed of a drive motor of the motor vehicle (1) is captured, and the contact between the at least one wheel and the object (8) is detected on the basis of an increase in the motor speed.

7. Method according to one of the preceding claims,
**characterized in that**
a direction of rotation of the at least one wheel is captured, and the contact between the at least one wheel and the object (8) is detected on the basis of the captured direction of rotation.

8. Method according to one of the preceding claims,
**characterized in that**
a current speed of the motor vehicle (1) is captured, and the contact between the at least one wheel and the object (8) is additionally detected on the basis of a change in the captured speed.

9. Method according to one of the preceding claims,
**characterized in that**
a torque provided by the drive motor is captured, and the contact between the at least one wheel and the object (8) is additionally detected on the basis of a change in the captured torque.

10. Method according to one of the preceding claims,
**characterized in that**
if the contact between the at least one wheel and the object (8) is detected, a torque provided by the drive motor for driving the at least one wheel is increased.

11. Driver assistance system (2) for a motor vehicle (1), which is designed to carry out a method according to one of the preceding claims.

12. Motor vehicle (1) having a driver assistance system (2) according to Claim 11.

## Revendications

1. Procédé permettant de manoeuvrer de manière au moins semi-autonome un véhicule automobile (1), procédé selon lequel une valeur de position est déterminée au moyen d'un capteur (4), laquelle valeur de position décrit une position relative instantanée entre un objet (8) dans une zone environnante (7) du véhicule automobile (1) et le véhicule automobile (1), une trajectoire de conduite (13) est déterminée, le véhicule automobile (1) est manoeuvré le long de la trajectoire de conduite (13) déterminée, **caractérisé en ce que** pendant la manoeuvre du véhicule automobile (1), sur la base de l'odométrie, la valeur de position est actualisée en continu et un contact d'au moins une roue du véhicule automobile (1) avec l'objet (8) est identifié, la valeur de position étant corrigée lorsque le contact de l'au moins une roue avec l'objet (8) est identifié et la valeur de position décrivant une position relative différente du contact de l'au moins une roue avec l'objet (8), une carte numérique de l'environnement étant fournie, laquelle décrit la zone environnante, et une position du véhicule automobile (1) et/ou de l'objet (8) dans la carte de l'environnement étant adaptée sur la base de la valeur de position corrigée.

2. Procédé selon la revendication 1,
**caractérisé en ce que**
dans le cas où le contact entre l'au moins une roue et l'objet (8) est identifié, une différence entre une position relative réelle entre le véhicule automobile (1) et l'objet (8) et la position relative décrite par la valeur de position est déterminée et la valeur de position est corrigée sur la base de la différence déterminée.

3. Procédé selon la revendication 2,
**caractérisé en ce que**
la différence est déterminée sur la base de dimensions de l'au moins une roue et/ou d'une position de l'au moins une roue par rapport à un point de référence prédéterminé du véhicule automobile (1).

4. Procédé selon l'une des revendications précédentes,
**caractérisé en ce**
**qu'**en outre, au moyen du capteur (8), un emplacement de stationnement (9) est identifié dans la zone environnante (7) et la trajectoire de conduite (13) pour le stationnement du véhicule automobile (1) dans l'emplacement de stationnement (9) est déterminée.

5. Procédé selon la revendication 4,
**caractérisé en ce**
**qu'**une bordure (12) est identifiée en tant qu'objet (8), laquelle délimite l'emplacement de stationnement (9) ou est disposée à l'intérieur de l'emplacement de stationnement (9).

6. Procédé selon l'une des revendications précédentes,
**caractérisé en ce**
**qu'**un régime d'un moteur d'entraînement du véhicule automobile (1) est détecté et le contact de l'au moins une roue avec l'objet (8) est identifié sur la base d'une augmentation du régime de moteur.

7. Procédé selon l'une des revendications précédentes,
**caractérisé en ce**
**qu'**un sens de rotation de l'au moins une roue est détecté et le contact de l'au moins une roue avec l'objet (8) est identifié sur la base du sens de rotation détecté.

8. Procédé selon l'une des revendications précédentes,
**caractérisé en ce**
**qu'**une vitesse instantanée du véhicule automobile (1) est détectée et le contact de l'au moins une roue avec l'objet (8) est en outre identifié sur la base d'une variation de la vitesse détectée.

9. Procédé selon l'une des revendications précédentes,
**caractérisé en ce**
**qu'**un couple produit à l'aide du moteur d'entraînement est détecté et le contact de l'au moins une roue avec l'objet (8) est identifié en outre sur la base d'une variation du couple détecté.

10. Procédé selon l'une des revendications précédentes,
**caractérisé en ce que**
lors de l'identification du contact de l'au moins une roue avec l'objet (8), un couple produit à l'aide du moteur d'entraînement pour l'entraînement de l'au moins une roue est augmenté.

11. Système d'aide à la conduite (2) pour un véhicule automobile (1), lequel système est conçu pour la mise en oeuvre d'un procédé selon l'une des revendications précédentes.

12. Véhicule automobile (1) comprenant un système d'aide à la conduite (2) selon la revendication 11.
